# EUROPEAN PATENT APPLICATION

(11) **EP 4 821 937 A1**
(43) Date of publication of application: **14.10.2026**
(21) Application number: 25168936.0
(22) Date of filing: 07.04.2025
(51) Int. Cl.: C07G 1/00

(54) **METHOD FOR PRODUCING WHITE FRAGMENTS OF LIGNIN**

(71) Applicant: Bloom Biorenewables SA, 1723 Marly (CH)
(72) Inventor: CHARMILLOT, Justine, 1004 Lausanne (CH); SCHOLTEN, Philip, 1920 Martigny (CH); MANKER, Lorenz, 1006 Lausanne (CH)
(74) Representative: Schaad, Balass, Menzl & Partner AG

(57) **Abstract**

The present invention relates to a method for producing white fragments of lignin, wherein the method comprises the steps of
a) providing an acetal protected fragment of lignin obtained by aldehyde assisted fractionation, wherein the aldehyde is selected from the group consisting of propionaldehyde and formaldehyde,
b) suspending the water-insoluble acetal protected fragment of lignin in an aqueous mixture of hydrogen peroxide and an inorganic alkaline compound to form a heterogeneous reaction system comprising a solid phase and a liquid phase,
c) reacting the water-insoluble acetal protected fragment of lignin und hydrogen peroxide to obtain white fragments of lignin,
d) separating the solid phase without the use of a precipitation process.

## Description

The present invention relates to a method for producing white fragments of lignin.

As global climate change intensifies and finite resources become increasingly scarce, the push for more sustainable production methods is gaining momentum across many industries - including cosmetics. Central to this shift is the use of renewable energy sources and bio-based raw materials.

Lignin is the second most abundant natural polymer and the largest source of natural aromatic monomers. It represents a vast, yet largely untapped, reservoir of renewable carbon with the potential to be used as a feedstock for fuels, chemicals, and materials. Currently, most lignin is produced as an industrial byproduct in pulp and paper production - such as through the Kraft process - and several million tons are generated annually, predominantly used as a low-cost fuel for energy and heat.

Lignin is a polyphenolic biopolymer rich in aromatic rings with conjugated structures and methoxy side chains, which contribute to its anti-UV, antioxidant, and antimicrobial activity - properties that are also highly valuable in cosmetic applications. This makes lignin an attractive, sustainable alternative for use as a preservative, stabilizer, or active component in formulations. With its natural origin and performance-enhancing properties, lignin holds great promise for driving eco-friendly innovation in the cosmetics industry. There are several methods for obtaining lignin fragments.

One of the most common methods is the Kraft process, which uses sodium hydroxide and sodium sulfide to extract lignin during wood pulping. This chemical process dissolves lignin and other organic compounds from the cellulose matrix of the wood. The resulting product, known as Kraft lignin, tends to have relatively high purity and molecular weight.

Another method is Soda lignin extraction, which employs sodium hydroxide without sodium sulfide. Similar to the Kraft process, this method yields lignin, though it generally has lower purity and molecular weight compared to Kraft lignin. Soda lignin is commonly used in paper production and as a biomass feedstock.

Alkaline Lignin Extraction (ALF lignin) is another technique that involves using alkaline extraction methods, typically employing tempered conditions and alkali sulfides. This method allows for the selective extraction of lignin and is often employed in chemical and biochemical research.

Enzymatic hydrolysis is another method that employs enzymes to break down the lignin structure. While this approach is specific and gentle, it often proves less efficient for lignin extraction compared to chemical methods.

Aldehyde Assisted Fractionation (AAF) is a more recent technique that employs aldehydes to assist in the selective extraction of lignin. This method enhances the yield of lignin fragments with desirable properties while maintaining high purity and quality.

The color of lignin fragments varies based on the extraction method, source, and structural composition. Generally, lignin appears brownish or yellowish. Kraft lignin is typically dark brown, while soda lignin often exhibits a lighter yellowish-brown hue. Organosolv lignin usually has a lighter coloration, ranging from yellow to light brown, due to its gentler extraction process. Aldehyde Assisted Fractionation (AAF) produces lignin fragments that are lighter in color and more uniform in appearance.

The color of the materials used for cosmetic applications is often not light enough to meet the high standards of aesthetics and visibility required. In the cosmetics industry, color shades play a crucial role, as they significantly influence the end product and can affect consumer acceptance. To address this color issue, targeted efforts have been made to achieve a whiter form of lignin fragments.

US4184845A discloses a two-step process for reducing the color of sulfonated alkali lignins and lignosulfonates by at least 80%. The first step involves the blocking of at least 90% of the free-phenolic hydroxyl groups in the lignin and then subjecting the blocked lignins to oxidative action by air, molecular oxygen or hydrogen peroxide.

WO2021/074210 discloses a method for bleaching lignin fragments containing one or more functional groups using ethyl acetate or water as the reaction medium, along with sodium hydroxide, and hydrogen peroxide. Although this bleaching process results in a whiter lignin, the color produced does not meet the requirements of the cosmetic industry.

US10787475B2 discloses a method of producing light colored lignin. The method comprises reacting a lignin composition with a hypochlorite composition having about 5 to about 70% available chlorine; and reacting the hypochlorite-treated lignin with hydrogen peroxide at a concentration of about 5 wt % to about 50 wt % to produce the light colored lignin, wherein the lignin composition includes at least one of sulfonated lignin, lignosulfonate, or both. The reaction is conducted at a pH above 7 in the presence of sodium hydroxide, potassium hydroxide, calcium hydroxide, magnesium hydroxide, or a combination thereof.

None of the methods mentioned above has succeeded in providing lignin that meets the requirements of the cosmetic industry.

The problem of the present invention is to provide white lignin fragments that fulfil the requirements of the cosmetic industry.

The problem is solved by the method according to claim 1. Further preferred embodiments are subject of dependent claims 2 to 8.

Surprisingly, it was found that with the method according to the present invention white lignin fragments can be produced. The method comprises the steps of
a) providing an acetal protected fragment of lignin obtained by aldehyde assisted fractionation, wherein the aldehyde is selected from the group consisting of propionaldehyde and formaldehyde,
b) Suspending the water-insoluble acetal protected fragment of lignin in an aqueous mixture of hydrogen peroxide and an inorganic alkaline compound to form a heterogeneous reaction system comprising a solid phase and a liquid phase,
c) reacting the water-insoluble acetal protected fragment of lignin und hydrogen peroxide to obtain white fragments of lignin,
d) separating the solid phase without the use of a precipitation process.

Surprisingly, it has been found that the method outlined in the present invention is capable of producing acetal-protected fragments of lignin with an exceptionally high degree of whiteness, even when starting from water-insoluble acetal-protected lignin fragments, wherein the aldehyde is selected from the group consisting of propionaldehyde and formaldehyde. These lignin fragments are also called PA-lignins and FA lignins. Said lignin fragments exhibit significantly greater whiteness compared to lignin fragments generated through alternative processes, such as the kraft lignin method. The mentioned acetal-protected fragments of lignin are, in contrast to kraft lignin and ALF lignin, as well as other acetal-protected fragments of lignin containing functional groups, insoluble in water. It has been demonstrated that this insolubility surprisingly provides an advantage for the bleaching process. The heterogeneous reaction medium results in significantly more effective color removal compared to all conventional lignins, including AAF lignin containing functional groups.

Both lignin fragments, which are economically valuable due to the good availability of the aldehydes, their high reactivity that enables high-yield extraction from wood, and their ability to form a heterogeneous reaction system in water, can be bleached with good yields and produce a very bright white color. The ability of FA-lignin fragments and PA-lignin fragments to create a heterogeneous reaction system in water, which surprisingly yields better results than a homogeneous reaction system, allows for the bleaching of lignin fragments in a reaction medium that is safe for the cosmetics industry.

Moreover, it could be shown that the method according to the present invention has no negative impact on the chemical structure and mechanical properties of the lignin fragments. For example, two-dimensional heteronuclear single quantum coherence spectroscopy (HSQC) reveals indistinguishable spectra between the bleached and unbleached lignins. Additionally, lignin depolymerization via catalytic hydrogenation, a standard technique for determining the degree of β-O-4 linkage preservation in lignin, reveals unchanged or even improved lignin monomer yields of the bleached lignins (likely due to removal of slight impurities by bleaching).

In the context of the present invention, the term "acetal protected fragment of lignin obtained by aldehyde-assisted fractionation" refers to lignin fragments that have been selectively extracted from lignocellulosic biomass through a process known as aldehyde-assisted fractionation, or AAF. During this process, aldehydes - herein propionaldehyde and formaldehyde - react with the reactive hydroxyl groups on the lignin structure, particularly at the benzylic positions, to form stable cyclic acetal linkages. These acetal groups serve to protect the lignin from unwanted condensation reactions and structural degradation that typically occur under conventional pulping or fractionation conditions. They are obtained for example by providing a lignocellulose-containing composition, heating said composition under acidic conditions (for example in the presence of sulfuric acid or HCI) together with an aldehyde selected from the group consisting of propionaldehyde and formaldehyde to obtain fragments of lignin. Typically, the fragments of lignin are separated before conducting the method according to the present invention. Typically, the fragments have a molecular weight of 1000-7000 g/mol, measured by gel permeation chromatography (GPC).

Preferably, a neutralization or acidifying step is performed before conducting the separation step, for example with hydrochloric acid or sulfuric acid, using a pH range such as 3.5 to 7. Since the PA lignin fragments and the FA lignin fragments are insoluble in water, there is no precipitation step after the bleaching process. The absence of the precipitation step not only streamlines the production process but also preserves the original particle size of the lignin powder. This preservation is crucial for achieving optimal performance in cosmetic applications. Alternatively, the neutralization step can be omitted due to the insolubility of PA and FA-lignins in the reaction medium. This allows for the recycling of NaOH and the reduction of waste associated with salt neutralization products.

In the context of the present invention, the term "hydrogen peroxide" refers to hydrogen peroxide typically provided in an aqueous solution comprising from about 20% to 30% by weight.

One embodiment relates to formaldehyde lignin fragments (also called FA-lignin) of the general formula (I) 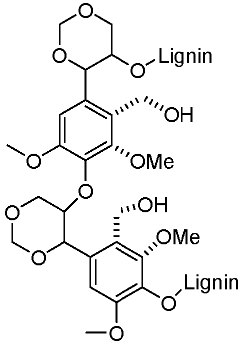 that have been treated with the method according to the present invention. The dashed lines indicate that hydroxymethyl and secondary methoxy groups are present in some, but not all, instances. Not only does the resulting acetal have poor water solubility, but formaldehyde is also particularly well-suited for large-scale applications due to its low cost.

One embodiment relates to propionaldehyde lignin fragments (also called PA-lignin) of the general formula (II) 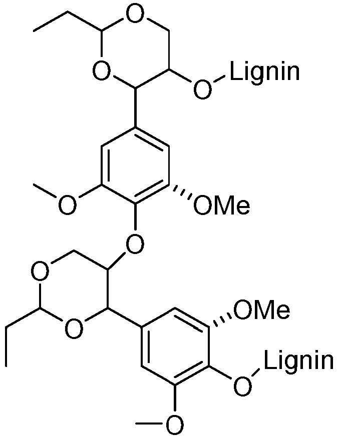 that have been treated with the method according to the present invention. The dashed lines indicate that hydroxymethyl and secondary methoxy groups are present in some, but not all, instances. The resulting acetal effectively stabilizes the lignin fragment. In addition, it is poorly soluble in water allowing to form a heterogenous reaction system and propionaldehyde is particularly well-suited for large-scale applications due to its low toxicity.

The concentration of lignin in the reaction medium is preferably in a range of 10 to 50% by weight, based on the total weight of the reaction system. Such a high lignin content allows for a greater amount of material to be processed per unit of time, increasing the overall productivity.

In one embodiment, the steps b) to d) are repeated 1 to 5 times, preferably 2 to 3 times. By replacing the colored liquid phase with a fresh aqueous mixture of hydrogen peroxide and an inorganic alkaline compound, the color is effectively eliminated. This method proves to be much more efficient than extending the duration of a single bleaching reaction. The repetition allows for better control and optimization of the bleaching process, leading to improved results in color removal. Thus, rather than relying on a longer reaction time, repeating the bleaching process multiple times facilitates a more effective and timely decolorization.

Preferably, the hydrogen peroxide concentration is 1 to 10% in the reaction medium. This concentration allows a successful bleaching without having a negative impact on the lignin fragment structure. Hydrogen peroxide is preferably added in several steps to better control the reaction.

The bleaching reaction takes place in the presence of an inorganic alkaline compound which is preferably sodium hydroxide or potassium hydroxide, most preferably sodium hydroxide. Preferably, the inorganic alkaline compound, most preferably sodium hydroxide, is present in a concentration of 0.1 to 2 M, more preferably about 1M. It has been found that such a small amount is sufficient to obtain a very white product.

Conducting the bleaching reaction at an optimized temperature of 40°C to 80°C, preferably between 75°C and 85°C, enhances the efficiency of the bleaching process by promoting the reactivity of the bleaching agents.

Preferably, the bleaching is conducted from 15 to 120 minutes, preferably 30 to 60 minutes. This specific reaction time is tailored to achieve effective bleaching results without the need for prolonged exposure, as longer reaction times do not yield significant improvements in bleaching efficacy. This helps to minimize the risk of potential degradation of the product and reduce energy consumption.

Due to their white color the lignin fragments obtained with the method according to the present invention are particularly useful in cosmetic applications. Their aesthetic appeal conveys cleanliness and quality, making them attractive to consumers. These white lignin fragments act as a versatile foundation, facilitating the incorporation of other colors into formulations like foundations and powders. Additionally, they provide excellent coverage and opacity, effectively concealing imperfections while enhancing the brightening effects of cosmetics.

### Figures

Figure 1: Lignin fragments before and after the inventive method
Figure 2: Comparison of water-insoluble AAF lignin fragments with water-soluble lignin fragments
Figure 3: Inventive lignin fragments compared with those from the prior art
Figure 4: PA lignin fragments after three bleaching cycles.
Figure 5: 2D HSQC NMR spectroscopy spectra of PA-lignin fragments before and after the inventive method

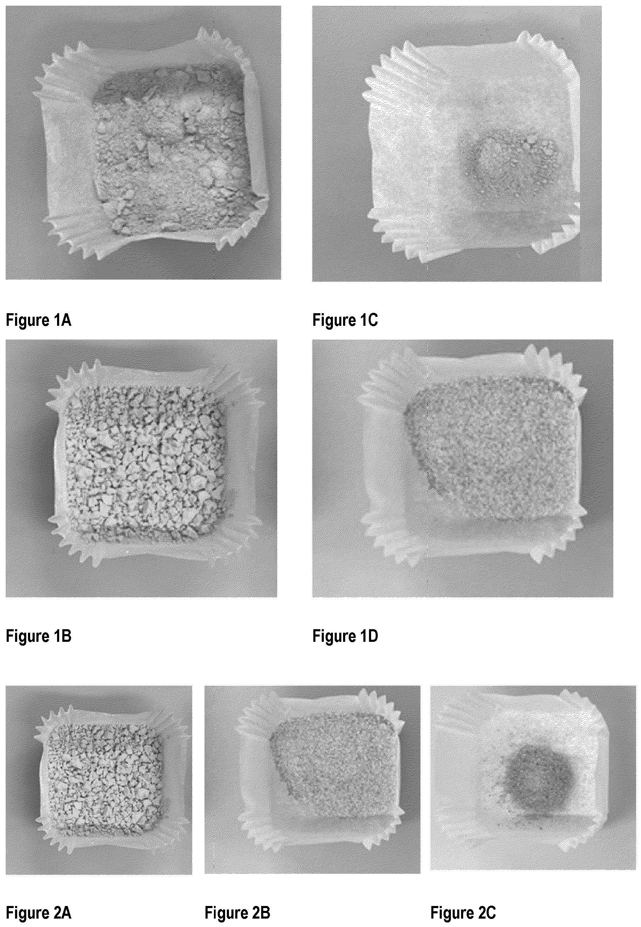

Figures 1A and 1B illustrate propionaldehyde-protected lignin before and after treatment with the method according to the present invention, respectively. Figures 1C and 1D show formaldehyde-protected lignin before and after applying the method according to the present invention. The results clearly demonstrate that the process is highly effective, resulting in white lignin fragments that meet the requirements of the cosmetic industry.

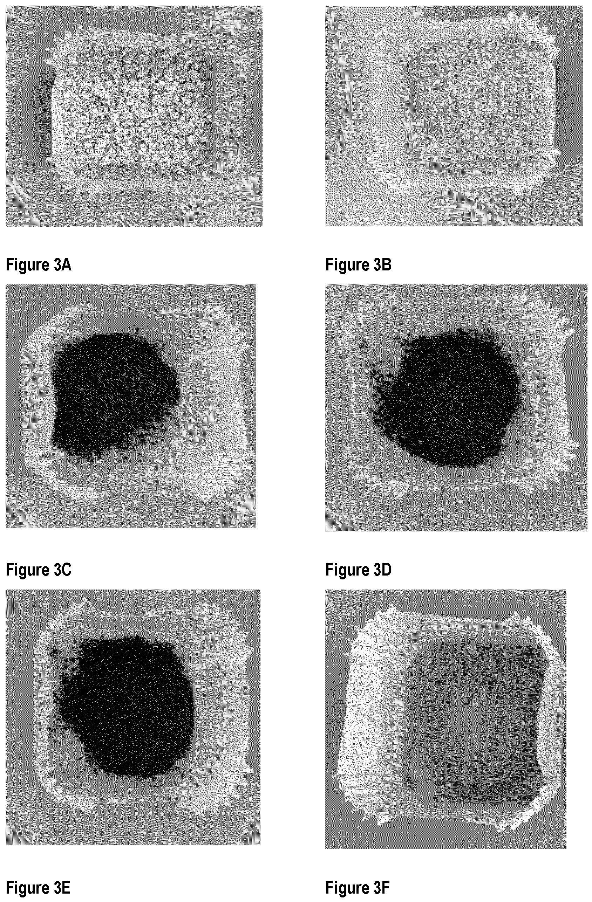

Figure 2 presents a comparison of the bleached water-insoluble AAF lignin fragments: propionaldehyde-protected lignin (Example 1; Figure 2A) and formaldehyde-protected lignin (Example 2; Figure 2B) alongside the bleached water-soluble glyoxylic acid-protected lignin fragment (comparative Example 3; Figure 2C). The water-soluble lignin fragment is noticeably darker than the water-insoluble counterparts. Furthermore, the yield of the lignin according to the invention is significantly higher, at 82% to 100%, compared to only 27% in the prior art. Figure 3 provides a comparison of the lignin fragments of the invention with those from the prior art, including propionaldehyde-protected lignin (Example 1; Figure 3A), formaldehyde-protected lignin (Example 2; Figure 3B), kraft lignin (comparative Example 4; Figure 3C), Protobind 6000 lignin (comparative Example 5; Figure 3D), Protobind 1000 lignin (comparative Example 6; Figure 3E), and lignosulfonic acid sodium with sodium hydroxide (comparative Example 7; Figure 3F).

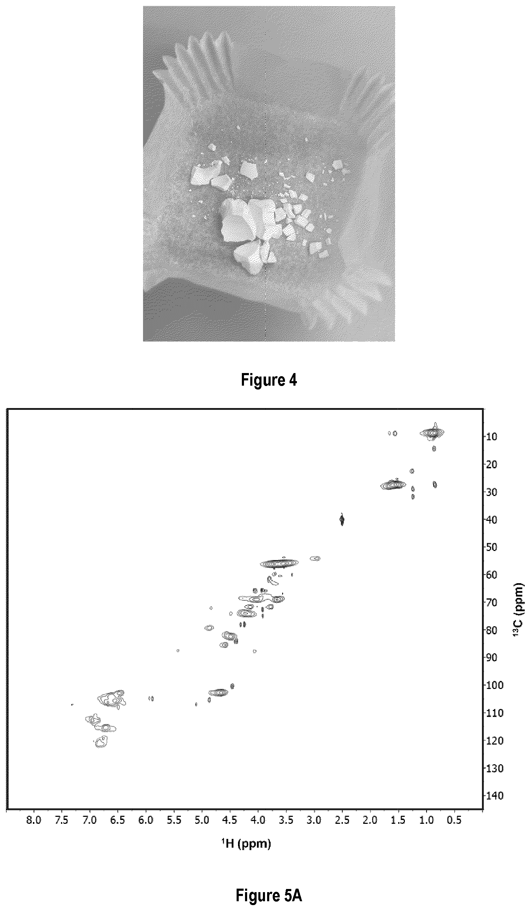

Figure 4 shows PA lignin after 3 bleaching cycles. By substituting the colored liquid phase with a new aqueous solution containing hydrogen peroxide and an inorganic alkaline agent, the color is effectively removed, leading to a highly white lignin fragment.

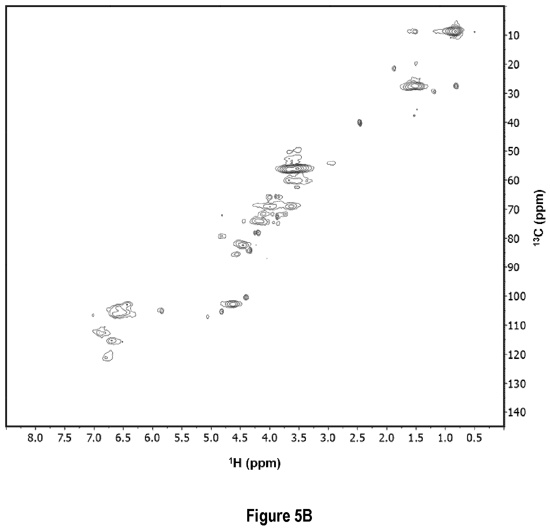

Figure 5 presents 2D HSQC NMR before (Figure 5A) and after (Figure 5B) the reaction. The comparison proves the lack of structural changes on the core lignin structure before and after the bleaching reaction.

### Examples

### Example 1: Color reduction of propionaldehyde-protected lignin with sodium hydroxide and hydrogen peroxide

1 gram of propionaldehyde-protected lignin (PA-lignin) was dispersed in 9 mL of a 1 molar aqueous solution of sodium hydroxide forming a heterogenous reaction system having a solid and a liquid phase. 1 mL of hydrogen peroxide 30% in water was subsequently added to the reaction system. The heterogenous reaction system was heated and maintained at 80°C for one hour and was then cooled down to room temperature. The reaction system was acidified to pH 4 with a 2 molar aqueous solution of hydrochloric acid. The solid phase was filtered on a nylon filter (0.8 µm pore size) and dried at 50°C under reduced pressure for 24 hours. An off-white powder was collected with a mass yield of 82%. A reductive depolymerization was effectuated on the PA-lignin and on the obtained bleached lignin by first adding 100 mg of the lignin in a high-pressure reactor together with 100 mg of ruthenium on carbon and 20 mL of ethanol. 10 bars of hydrogen gas were introduced in the reactor and the mixture was heated and maintained at 250°C for three hours. After allowing the reaction to cool down to room temperature, the solution was filtered and analyzed by GC-FID. The lignin monomer yield of the PA-lignin fragment was 1.8 mmol monomers per gram of lignin, and the lignin monomer yield of the bleached PA-lignin fragment reached 1.9 mmol monomers per gram of lignin.

### Example 2: Color reduction of formaldehyde-protected lignin with sodium hydroxide and hydrogen peroxide

1 gram of formaldehyde-protected lignin (FA-lignin) was dispersed in 9 mL of a 1 molar aqueous solution of sodium hydroxide forming a heterogenous system having a solid and a liquid phase. 1 mL of hydrogen peroxide 30% in water was subsequently added to the reaction system. The heterogenous reaction system was heated and maintained at 80°C for one hour and was then cooled down to room temperature. The reaction system was acidified to pH 4 with a 2 molar aqueous solution of hydrochloric acid. The solid phase was filtered on a nylon filter (0.8 µm pore size) and dried at 50°C under reduced pressure for 24 hours. An off-white powder was collected with a mass yield of 100%. A reductive depolymerization was effectuated on the FA-lignin and on the obtained bleached lignin by first adding 100 mg of the lignin in a high-pressure reactor together with 100 mg of ruthenium on carbon and 20 mL of ethanol. 10 bars of hydrogen gas were introduced in the reactor and the mixture was heated and maintained at 250°C for three hours. After allowing the reaction to cool down to room temperature, the solution was filtered and analyzed by GC-FID. The lignin monomer yield of the FA-lignin fragment was 1.6 mmol monomers per gram of lignin, and the lignin monomer yield of the bleached FA-lignin fragment reached 1.5 mmol monomers per gram of lignin.

### Example 3: Color reduction of glyoxylic acid-protected lignin with sodium hydroxide and hydrogen peroxide (comparative experiment)

1 gram of glyoxylic acid-protected lignin (GA-lignin) was fully dissolved in 9 mL of a 1 molar aqueous solution of sodium hydroxide. 1 mL of hydrogen peroxide 30% in water was subsequently added to the reaction medium. The mixture was heated and maintained at 80°C for one hour and was then cooled down to room temperature. A precipitation step was performed by acidifying the solution to pH 4 using a 2 molar aqueous solution of hydrochloric acid, resulting in the formation of an off-white solid. The precipitate was filtered on a nylon filter (0.8 µm pore size) and dried at 50°C under reduced pressure for 24 hours. An off-white powder was collected with a mass yield of 27%.

### Example 4: Color reduction of Kraft lignin with sodium hydroxide and hydrogen peroxide (comparative experiment)

1 gram of Protobind KW (Kraft lignin) was fully dissolved in 9 mL of a 1 molar aqueous solution of sodium hydroxide. 1 mL of hydrogen peroxide 30% in water was subsequently added to the reaction medium. The mixture was heated and maintained at 80°C for one hour and was then cooled down to room temperature. A precipitation step was conducted by acidifying the solution to pH 4 with a 2 molar aqueous solution of hydrochloric acid, yielding a brown solid. The precipitate was filtered on a nylon filter (0.8 µm pore size) and dried at 50°C under reduced pressure for 24 hours. A dark brown powder was collected with a mass yield of 63%.

### Example 5: Color reduction of protobind 6000 lignin with sodium hydroxide and hydrogen peroxide (comparative experiment)

1 gram of Protobind 6000 (SODA lignin) was fully dissolved in 9 mL of a 1 molar aqueous solution of sodium hydroxide. 1 mL of hydrogen peroxide 30% in water was subsequently added to the reaction medium. The mixture was heated and maintained at 80°C for one hour and was then cooled down to room temperature. A precipitation step was conducted by acidifying the solution to pH 4 with a 2 molar aqueous solution of hydrochloric acid, yielding a brown solid. The precipitate was filtered on a nylon filter (0.8 µm pore size) and dried at 50°C under reduced pressure for 24 hours. A dark brown powder was collected with a mass yield of 77%.

### Example 6: Color reduction of protobind 1000 lignin with sodium hydroxide and hydrogen peroxide (comparative experiment)

1 gram of Protobind 1000 (SODA lignin) was fully dissolved in 9 mL of a 1 molar aqueous solution of sodium hydroxide. 1 mL of hydrogen peroxide 30% in water was subsequently added to the reaction medium. The mixture was heated and maintained at 80°C for one hour and was then cooled down to room temperature. A precipitation step was conducted by acidifying the solution to pH 4 with a 2 molar aqueous solution of hydrochloric acid, yielding a brown solid. The precipitate was filtered on a nylon filter (0.8 µm pore size) and dried at 50°C under reduced pressure for 24 hours. A dark brown powder was collected with a mass yield of 79%.

### Example 7: Color reduction of lignosulfonic acid sodium with sodium hydroxide and hydrogen peroxide (comparative experiment)

1 gram of lignosulfonic acid sodium was dissolved in 9 mL of a 1 molar aqueous solution of sodium hydroxide. 1 mL of hydrogen peroxide 30% in water was subsequently added to the reaction medium. The mixture was heated and maintained at 80°C for one hour and was then cooled down to room temperature. A precipitation step was conducted by first acidifying the solution to pH 4 with a 2 molar aqueous solution of hydrochloric acid, and dropping the solution on 60 mL of ethanol to obtain a brown solid. The latter was filtered on a nylon filter (0.8 µm pore size) and dried at 50°C under reduced pressure for 24 hours. A brown powder was collected with a mass yield of 74%.

## Claims

1. Method for producing white fragments of lignin, wherein the method comprises the steps of
a) providing an acetal protected fragment of lignin obtained by aldehyde assisted fractionation, wherein the aldehyde is selected from the group consisting of propionaldehyde and formaldehyde,
b) suspending the water-insoluble acetal protected fragment of lignin in an aqueous mixture of hydrogen peroxide and an inorganic alkaline compound to form a heterogeneous reaction system comprising a solid phase and a liquid phase,
c) reacting the water-insoluble acetal protected fragment of lignin and hydrogen peroxide to obtain white fragments of lignin,
d) separating the solid phase without the use of a precipitation process.

2. Method to claim 1, conducting a neutralization or acidifying step before the separation step, preferably by adding hydrochloric acid or sulfuric acid.

3. Method according to any of the preceding claims, wherein the inorganic alkaline compound is selected from the group consisting of sodium hydroxide and potassium hydroxide, preferably sodium hydroxide.

4. Method according to any of the preceding claims, wherein the aldehyde is propionaldehyde.

5. Method according to any of claim 1 to 3, wherein the aldehyde is formaldehyde.

6. Method according to any of the preceding claims, wherein steps b) to d) are repeated 1 to 5 times, preferably 2 to 3 times.

7. Method according to any of the preceding claims, wherein the bleaching is conducted at a temperature of 40°C to 80°C, preferably 75°C to 85°C.

8. Method according to any of the preceding claims, wherein the bleaching is conducted from 15 to 120 minutes, preferably 30 to 60 minutes.
